# EUROPEAN PATENT APPLICATION

(11) **EP 2 700 828 A1**
(43) Date of publication of application: **26.02.2014**
(21) Application number: 12774164.3
(22) Date of filing: 09.04.2012
(51) Int. Cl.: F16B 19/10, F16B 19/00

(54) **FASTENER**

(30) Priority: 18.04.2011 JP 2011092263
(71) Applicant: Nifco Inc., Kanagawa 244-8522 (JP)
(72) Inventor: FUKUMOTO, Mitsuru, Yokohama-shi Kanagawa 244-8522 (JP)
(74) Representative: Gassner, Wolfgang
(86) International application number: PCT/JP2012/002461
(87) International publication number: WO 2012/144157

(57) **Abstract**

A fastener which can clearly display a fastening completion state is provided.

A fastener, which can be connected to a vehicle body panel having an attachment hole, includes a main body including a leg portion which can be inserted into the attachment hole, and a head portion provided in a base end of the leg portion, and forming a pin recipient hole opening to an outer face of the head portion from an inside of the leg portion, and forming an elastic claw in a side portion of the leg portion; a pin received into the inner hole, and being displaceable between a first position allowing a displacement of the elastic claw into the inner hole, and a second position blocking the displacement of the elastic claw into the inner hole; and a lid member connected to the head portion, and holding the pin in the second position. The pin includes a plate piece portion having flexibility in the base end and being bent. The lid member includes slots which are through-holes, and in a state wherein the lid member is connected to the head portion, the plate piece portion is pressed by the lid member so as to be deformed, and to block one end of each slot.

## Description

### Field of Technology

The present invention relates to a fastener, more specifically, a technology allowing a fastening completion state by a fastener to be confirmed by a detection device.

### Background Art

Conventionally, there is a fastener, wherein by using a fastener made of resin, parts such as a curtain airbag and the like, are fastened to a vehicle body (for example, Patent Document 1). As for such a fastener, the fastening completion state is generally confirmed visually. However, in recent years, in the light of traceability, it is desired to record the number of an attachment of assembly parts and the like relative to the vehicle body, or record whether or not the attachment has been reliably carried out. Consequently, as for the fastener, it is also required to mechanically and electrically confirm and record the number and the fastening completion state by the detection device. Responding to such a request, there is a fastener grasping the fastening completion state of the fastener by providing an electronic circuit respectively to a fastener comprising a combination of two parts or above so that the circuit of each part forms a resonant circuit when the fastener reaches the fastening completion state so as to detect an electromagnetic wave generated by the fastener (for example, Patent Document 2).

### Prior Art Documents

### Patent Documents

Patent Document 1: Japanese Unexamined Patent Application Publication No. 2010-60017
Patent Document 2: Japanese Patent No. 4264325

### Disclosure of the Invention

### Problems to be Solved by the Invention

The fastener according to the Patent Document 2, however, the electronic circuit has to be formed in the fastener, so as to cause a problem in that a structure becomes complicated so as to increase a manufacturing cost. Also, in such fastener, in order to reliably detect the fastening completion state, it is preferable that a display or a signal clearly (largely) changes between a state wherein the fastening is incomplete, and the fastening completion state.

The present invention is made in view of the aforementioned problem, and an object of the present invention is to provide a fastener allowing the fastening completion state to be clearly displayed.

### Means for Solving the Problems

In order to obtain the aforementioned object, the present invention is a fastener (1) which can be connected to a member (100) having an attachment hole (101), and comprises a main body (2) including a leg portion (11) which can be inserted into the attachment hole, and a head portion (12) provided in a base end of the leg portion, and which cannot pass through the attachment hole, forming an inner hole (21) extending in an axis line direction of the leg portion from an inside of the leg portion, and opening to an outer face of the head portion, and forming an elastic claw (26) in a side portion of the leg portion, which can recede to enter into the inner hole by an elastic deformation while engaging with the attachment hole by protruding to an outer side of the leg portion; a pin (3) received into the inner hole in such a way that the base end protrudes from an end portion on the aforementioned head portion side of the inner hole, and being displaceable between a first position allowing a displacement of the elastic claw into the inner hole, and a second position blocking the displacement of the elastic claw into the inner hole; and a lid member (4) connected to the head portion, and holding the pin in the second position. The pin includes a plate piece portion (32) having flexibility in the base end and being bent. The lid member includes a display hole (51) which is a through-hole. In a state wherein the lid member is connected to the head portion, the plate piece portion is pressed by the lid member so as to be deformed, and to block one end of the display hole.

According to the configuration, in a fastening completion state of the fastener, one end of the display hole is blocked by the plate piece portion, so that, for example, by detecting a depth of the display hole by a laser detector and the like, or by detecting a color of the plate piece portion exposed outside through the display hole by a CCD camera and the like, the fastening completion state of the fastener can be detected. Especially, in the fastening completion state, the plate piece portion is pressed by the lid member so as to be deformed. Thereby, for the first time, one end of the display hole is blocked, so that in a state wherein the fastening is incomplete, one end of the display hole will never be blocked so as to clearly distinguish the fastening completion state and the state wherein the fastening is incomplete.

Also, in another aspect of the present invention, the display hole is a slot group (52) comprising a plurality of slots arrayed in a bar code shape, and in a state wherein the lid member is connected to the head portion, the plate piece portion blocks a predetermined slot of the slot group.

According to the configuration, by using an existing bar code reader, the fastening completion state of the fastener can be confirmed so as to increase versatility.

Also, in another aspect of the present invention, the lid member is turnably supported in the head portion.

According to the configuration, the main body and the lid member can be formed as one assembly body so as to improve attachment workability at a usage time of the fastener.

Also, in another aspect of the present invention, the lid member includes a guide hole (47) having a long hole shape, and the pin includes a guide convex portion (35) received into the guide hole displaceably. The lid member turns relative to the head portion, so that while sliding inside the guide hole, the guide convex portion is pressed from a hole wall of the guide hole, and the pin is displaced relative to the inner hole.

According to the configuration, since the main body, the lid member, and the pin can be formed as one assembly body, the attachment workability at the usage time of the fastener improves. Also, by turning the lid member, the pin can protrude and enter with respect to the inner hole, so that an operation is easily carried out.

Also, in another aspect of the present invention, the plate piece portion has a different color from the lid member.

According to the configuration, using a heretofore known CCD camera and the like, the fastening completion state of the fastener can be detected.

### Effect of the Invention

According to the aforementioned configurations, the fastener allowing the fastening completion state to be clearly displayed can be provided.

### Brief Description of the Drawings

Fig. 1 is a perspective view of a fastener according to an embodiment.
Fig. 2 is a perspective view of the fastener according to the embodiment.
Fig. 3 is an exploded perspective view of the fastener according to the embodiment.
Fig. 4 is a plan view of the fastener according to the embodiment.
Fig. 5 is a cross-sectional view taken along a line V-V in Fig. 4.
Fig. 6 is a cross-sectional view showing a state on the way when a curtain airbag is fastened to a vehicle body panel using the fastener according to the embodiment.
Fig. 7 is a plan view showing the state on the way when the curtain airbag is fastened to the vehicle body panel using the fastener according to the embodiment.
Fig. 8 is a cross-sectional view showing a fastening completion state when the curtain airbag is fastened to the vehicle body panel using the fastener according to the embodiment.
Fig. 9 is a plan view showing the fastening completion state when the curtain airbag is fastened to the vehicle body panel using the fastener according to the embodiment.

### Best Modes of Carrying out the Invention

Hereinafter, with reference to drawings, embodiments wherein the present invention is applied to a fastener for attaching a curtain airbag to a vehicle body panel will be explained in detail. In the following explanation, each direction is determined based on a coordinate axis shown in each figure.

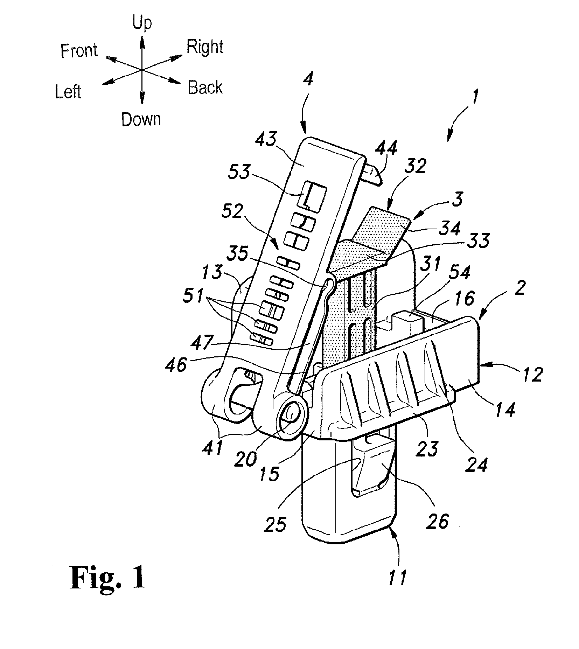

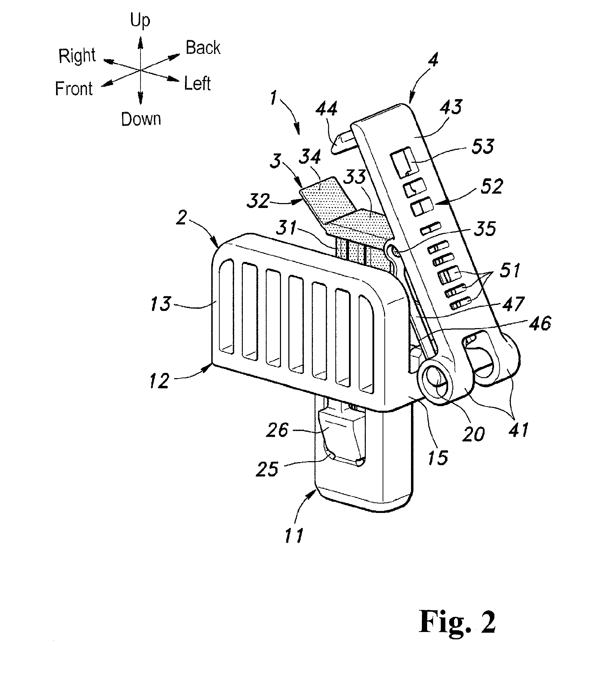

As shown in Figs. 1 to 5, a fastener 1 according to the embodiment is formed by a main body 2, a pin 3, and a lid member 4. The main body 2, the pin 3, and the lid member 4 are formed by injection molding of a resin material such as, for example, polyacetal. Here, it is preferable that the pin 3 and the lid member 4 are set to be clearly distinguishable in color. For example, it is preferable that the lid member 4 is a light color, and the pin 3 is a deep color, and in the present embodiment, the lid member 4 is white and the pin 3 is black. The color may be provided by including a predetermined artificial color in the resin material before the pin 3 and the lid member 4 are molded, or applying a predetermined paint after the injection molding.

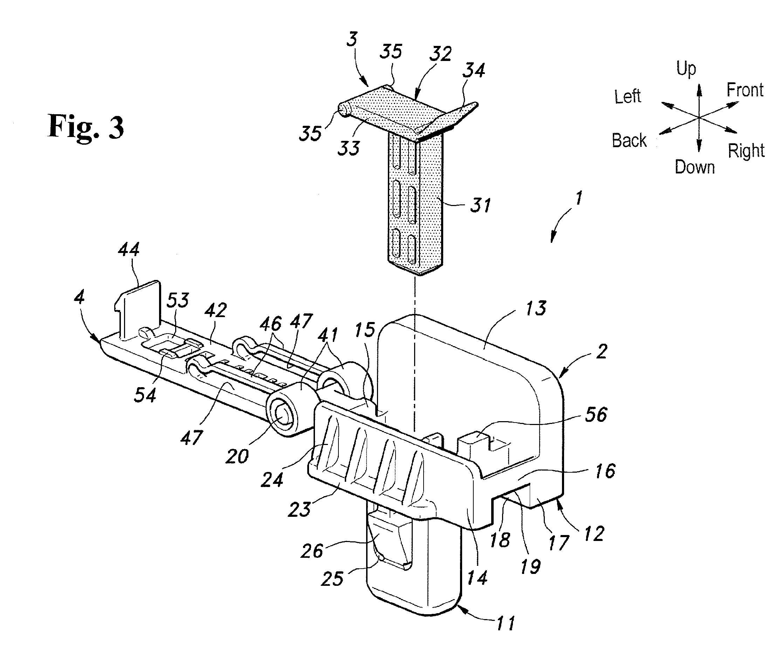

The main body 2 includes a leg portion 11 having a square prism shape and extending in an up-and-down direction; and a head portion 12 continued to an upper end of the leg portion 11, and extending in a right-and-left direction so as to provide a T shape viewed from the front. Namely, the head portion 12 continues to the upper end of the leg portion 11 in an intermediate portion in a longitudinal direction (the right-and-left direction), and extends in a direction orthogonal to an axis line direction of the leg portion 11. The head portion 12 provides a box shape comprising a front side wall 13, a back side wall 14, a left side wall 15, a right side wall 16, and a bottom plate 17, and opening upward. The front side wall 13 is formed higher than the back side wall 14. In a right end portion of the bottom plate 17, there is formed a through-hole 18 passing through in the up-and-down direction (see Figs. 3 to 5). The through-hole 18 extends in such a way as to come around up to a lower side of a base portion of the right side wall 16, and there is exposed a lower end face 19 of the right side wall 16. In the left side wall 15, a hinge axis 20 protrudes to have an axis line extending in a front-and-back direction.

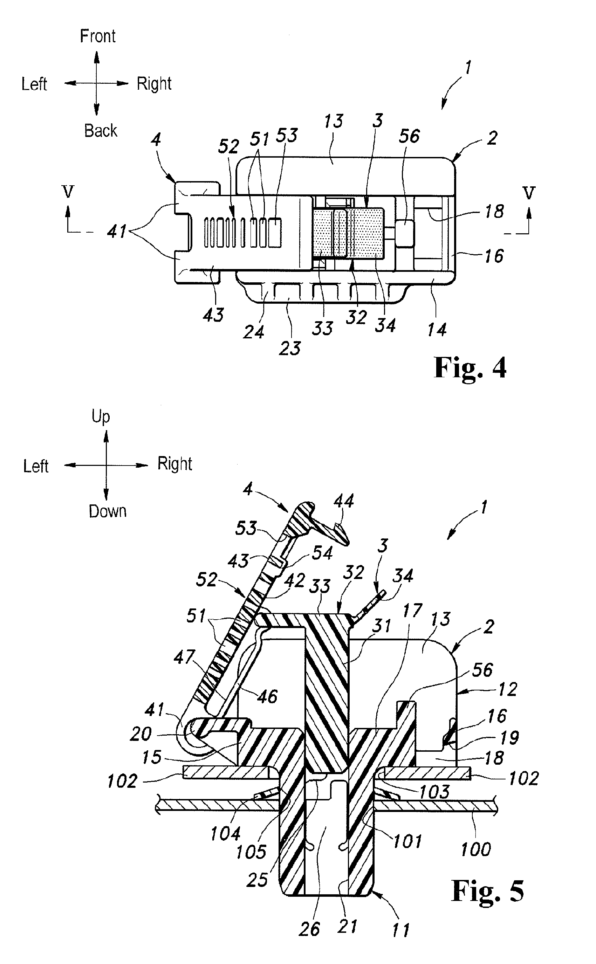

As shown in Fig. 5, in the leg portion 11, there is formed a pin recipient hole (an inner hole) 21 having a cross-sectional surface of a square shape, into which the leg portion 11 is passed through in the axis line direction (the up-and-down direction), and the upper end thereof opens to an upper face of a central portion in the right-and-left direction of the bottom plate 17 of the head portion 12.

In a lower edge of the back side wall 14 of the head portion 12, a rib 23 extends along the right-and-left direction. The rib 23 has an effect of expanding a bottom face of the head portion 12 backward so as to increase a contact area with an object (the later-mentioned curtain airbag 102) which becomes an attachment object. In the present embodiment, the rib 23 is reinforced by another rib 24 provided to protrude on the back side wall 14.

In a front side portion and a back side portion mutually facing by clamping the pin recipient hole 21 of the leg portion 11, there is respectively formed a claw hole 25 communicating the pin recipient hole 21 with an outer face. In a lower edge of each claw hole 25, there is respectively formed an elastic claw 26 extending upward inside the claw hole 25. In each elastic claw 26, an outer face is formed in a tapered shape in such a way as to protrude to an outer side of the leg portion as heading for an end side (an upper end side). On the upper end thereof, there is formed a non-return face facing upward. The elastic claw 26 tilts and falls into the pin recipient hole 21 by an elastic deformation so as to recede and enter into the pin recipient hole 21.

The pin 3 includes an axis portion 31 having a square prism shape which can fit into the pin recipient hole 21; and a plate piece portion 32 provided in an upper end of the axis portion 31. The plate piece portion 32 includes a plate-like left half portion 33 extending to a left side such that a surface faces the up-and-down direction; and a flake-like right half portion 34 extending to a right side and upward by bending from a right end edge of the left half portion 33. The right half portion 34 has an angle of approximately 135 degrees relative to the left half portion 33, and is formed to be thin-walled so as to have flexibility. In a front portion and a back portion of a left end of the left half portion 33, there is provided a cylindrical guide convex portion 35 protruding in the front-and-back direction.

The axis portion 31 is inserted into the pin recipient hole 21, and abuts against a back face of the elastic claw 26 so as to prevent the elastic claw 26 from tilting and falling into the pin recipient hole 21, and to maintain the elastic claw 26 in a state of protruding from the front side portion and the back side portion of the leg portion 11.

The lid member 4 is formed in a plate shape extending in the right-and-left direction, and includes a pair of bearings 41 in one end thereof. The pair of bearings 41 is pivotally supported at the hinge axis 20 of the head portion 12, so that the lid member 4 is turnably connected relative to the main body 2. An end portion, wherein the bearing 41 of the lid member 4 is provided, is positioned in the left side, and on the basis of a state wherein the other end is positioned in the right side (a state shown in Fig. 1), a face facing a lower side of the lid member 4 is made as a lower face 42, and a face facing an upper side of the lid member 4 is made as an upper face 43. In the lower face 42 of the other end of the lid member 4, there is provided a locking claw 44 protruding approximately vertically relative to the lower face 42. Also, in the lid member 4, there is provided a pair of guide pieces 46 extending along front and back edges in the lower face thereof. The guide piece 46 forms a guide hole 47 having a long hole shape and extending along a longitudinal direction of the lid member 4 in cooperation with the lower face of the lid member 4.

In main faces (the upper face 43 and the lower face 42) of the lid member 4, a plurality of slots 51, which is slender in the front and back and passes through the lid member 4 in a thickness direction, is formed in the right-and-left direction so as to form a slot group 52 displaying one predetermined bar code. Among the slots 51 forming the slot group 52, the slot 51 positioned in the right end is a large slot 53 having a large width in the right-and-left direction compared to the other slots. The large slot 53 does not display one portion of a predetermined bar code pattern in itself, and one portion is blocked so as to display one portion of the predetermined bar code pattern. In the vicinity of the large slot of the lower face 42 of the lid member 4, there is provided a protrusion 54 to protrude and extend in the right-and-left direction.

In the bottom plate 17 of the head portion 12 of the main body 2, there is provided a projecting piece 56 to protrude upward so as to fit into the large slot 53 in a state wherein the lid member 4 blocks an upper portion opening of the head portion 12.

As shown in Figs. 1, 2, 4, and 5, in the fastener 1, a state wherein an end of the axis portion 31 of the pin 3 fits into the pin recipient hole 21 of the main body 2, and the guide convex portion 35 of the pin 3 is received inside the guide hole 47 of the lid member 4, is an initial state. As shown in Fig. 5, in the initial state, the axis portion 31 does not abut against the elastic claw 26, and the elastic claw 26 can tilt and fall into the pin recipient hole 21. At that time, a position of the pin 3 is called a first position.

Next, using the fastener 1 configured as mentioned above, a method of fastening the curtain airbag 102 to a vehicle body panel 100, and a method of confirmation of the fastening completion state of the fastener 1 will be explained. In a proper position of the vehicle body panel 100, there is formed an attachment hole 101 which is a thorough-hole having a square shape into which the leg portion 11 of the main body 2 of the fastener 1 can be inserted to pass through. In a similar fashion, in a proper position of an ear portion (a fastener portion) of the curtain airbag 102, there is formed an attachment hole 103 which is a through-hole having a square shape into which the leg portion 11 can be inserted to pass through. A disc spring 104 is installed between the vehicle body panel 100 and the curtain airbag 102.

As shown in Fig. 5, the leg portion 11 of the fastener 1 is inserted into the attachment hole 103 of the curtain airbag 102, an inner hole 105 of the disc spring 104, and the attachment hole 101 of the vehicle body panel 100 in that order. When the leg portion 11 passes through each hole 103, 105, and 101, each elastic claw 26 of the leg portion 11 is pressed against a hole wall of each hole 103, 105, and 101 so as to recede and enter into the pin recipient hole 21, and to pass through each hole 103, 105, and 101. After passing through the attachment hole 101, each elastic claw 26 protrudes from the outer face of the leg portion 11 by a restoring force thereof, and is caught on a hole edge of the attachment hole 101 in the non-return face. Thereby, the fastener 1 is connected to the vehicle body panel 100, and the curtain airbag 102 is clamped between the head portion 12 of the fastener 1 and the vehicle body panel 100 through the disc spring 104. Incidentally, in that state, by applying a comparatively-large removal force to the fastener 1, each elastic claw 26 can be tilted and fallen into the pin recipient hole 21 so as to release a connection between the fastener 1 and the vehicle body panel 100.

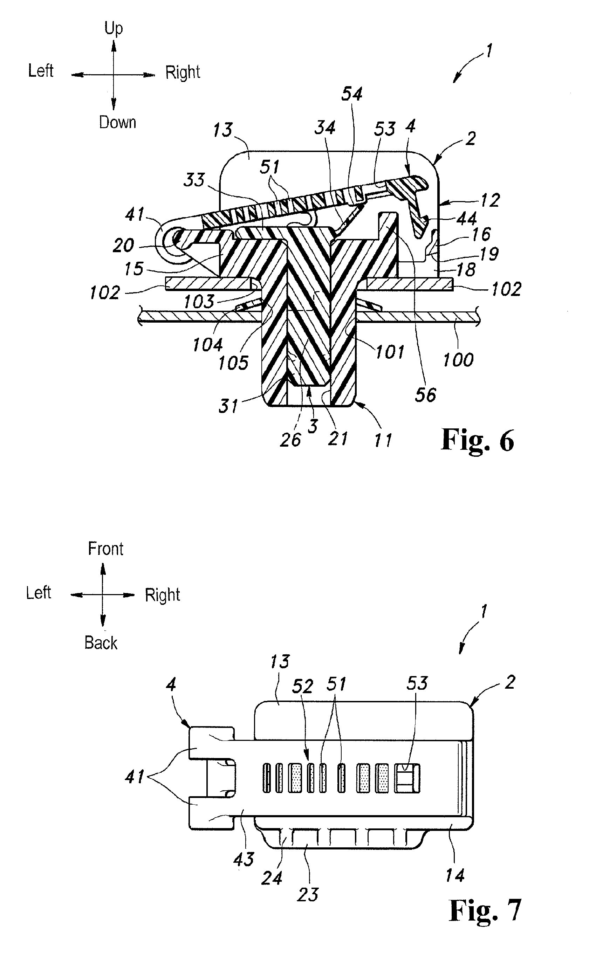

Next, the lid member 4 is turned to a head portion 12 side around the hinge axis 20 in such a way as to block the upper portion opening of the head portion 12 by the lid member 4. At that time, a turning direction of the lid member 4 is called a closing direction (clockwise in Fig. 5), and an inverse direction is called an open direction (counterclockwise in Fig. 5). Since the guide convex portion 35 has been received into the guide hole 47 of the lid member 4, the pin 3 moves downward accompanied by the turning of the lid member 4 in the closing direction, i.e., in a direction wherein the axis portion 31 fits into the pin recipient hole 21 further. When turning into the closing direction of the lid member 4 proceeds, the left half portion 33 of the plate piece portion 32 of the pin 3 abuts against the bottom plate 17 of the head portion 12, and the fitting of the axis portion 31 into the pin recipient hole 21 is completed so as to become a state shown in Figs. 6 and 7. At that time, a state of the fastener 1 is called an intermediate state, and a position of the pin 3 is called a second position. In the intermediate state, the axis portion 31 reaches up to a position facing a rear face of the elastic claw 26 so as to prevent each elastic claw 26 from tilting and falling into the pin recipient hole 21. Thereby, the leg portion 11 cannot be removed from the attachment hole 101 of the vehicle body panel 100.

In the intermediate state, an end of the right half portion 34 of the plate piece portion 32 abuts against the protrusion 54 of the lid member 4. Consequently, in order to turn the lid member 4 into the closing direction further from the intermediate state, the right half portion 34 of the plate piece portion 32 is required to be bent (deformed). Consequently, the right half portion 34 of the plate piece portion 32 urges the lid member 4 in the open direction by a restoring force. Thereby, when the lid member 4 is turned in the closing direction, it is necessary to press the lid member 4 against an urging force of the right half portion 34 of the plate piece portion 32. Incidentally, in a case wherein a load (an external force) into the closing direction is not applied to the lid member 4, the restoring force (the urging force) of the right half portion 34 is set to become the state in Fig. 6. The restoring force of the right half portion 34 can be appropriately adjusted by changing a material or a thickness of the right half portion 34.

In the state shown in Figs. 6 and 7, it is preferable that a length of the right half portion 34 is set so as not to overlap with the large slot 53 in the up-and-down direction, i.e., set so that the end of the right half portion 34 cannot be viewed through the large slot 53 when the fastener 1 is viewed from above. Even in a state wherein a viewing direction is slightly out of alignment from the up-and-down direction, it is preferable that the end of the right half portion 34 cannot be viewed through the large slot 53.

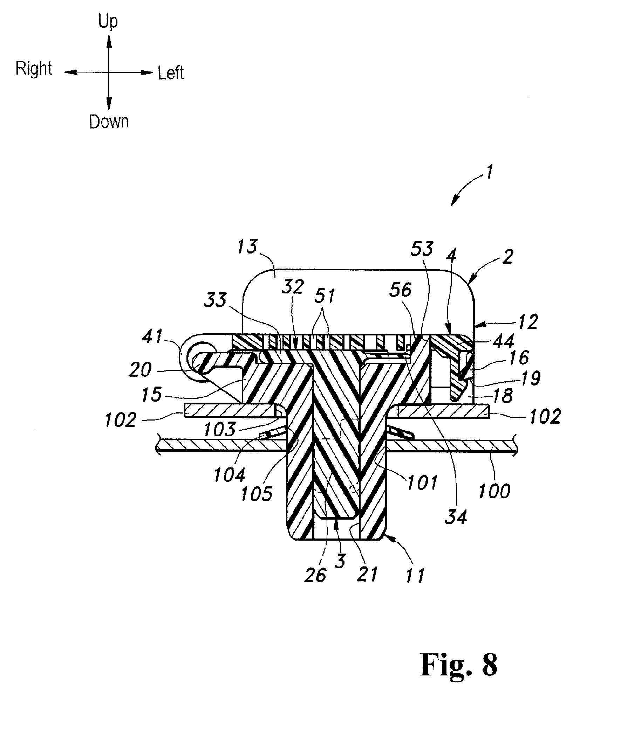

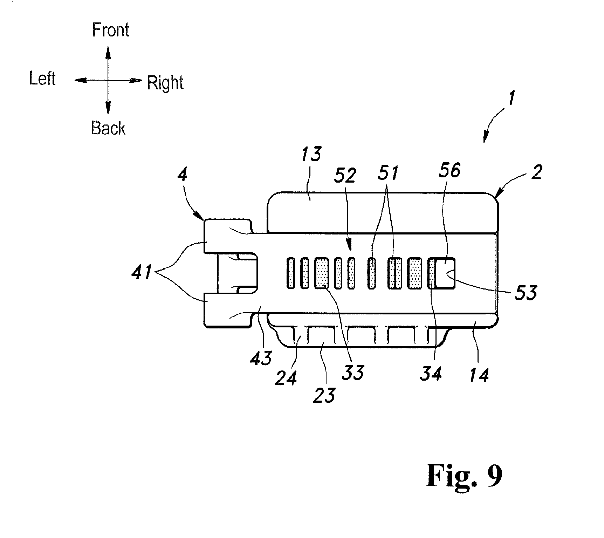

From the intermediate state, when the lid member 4 is turned further in the closing direction against the urging force of the right half portion 34, and the lid member 4 is turned up to a position blocking the upper portion opening of the head portion 12, as shown in Figs. 8 and 9, the locking claw 44 fits into the through-hole 18 of the head portion 12 so as to be locked in the lower end face 19 of the right side wall 16. Thereby, the lid member 4 is fixed to the main body 2 in the position blocking the upper portion opening of the head portion 12. That state is called the fastening completion state of the fastener 1. Incidentally, if the external force applied to the lid member 4 is eliminated in an uncompleted state wherein an engagement between the locking claw 44 and the lower end face 19 is not completed, the lid member 4 is urged by the right half portion 34 of the plate piece portion 32 so as to return to the intermediate state.

In the fastening completion state of the fastener 1, the projecting piece 56 fits into the large slot 53 so as to fill one portion of the large slot 53. Also, the protrusion 54 of the lid member 4 presses the right half portion 34 of the plate piece portion 32, so that the right half portion 34 is bent and extends to the right side roughly in parallel to the lid member 4. Then, the end of the right half portion 34 is disposed so as to block the remaining opening portion of the large slot 53 in which one portion is filled by the projecting piece 56.

As shown in Fig. 8 and Fig. 9, an engagement structure between the locking claw 44 and the lower end face 19 is formed, and the lid member 4 becomes the fastening completion state unturnably fixed to the main body 2, so that for the first time, one portion of the large slot 53 is filled by the projecting piece 56, and the right half portion 34 is disposed in the remaining portion of the large slot 53. Accordingly, a bar code by the slot group 52 and the plate piece portion 32 is displayed on an upper face of the fastener 1. In that state, by using a bar code reader with a laser system which can detect a depth of each slot 51 whose lower end is blocked by the plate piece portion 32, the bar code displayed by the slot group 52 and the plate piece portion 32 of the fastener 1 can be recognized. Also, by using a bar code reader with a CCD system which can recognize a difference of colors of the lid member 4 and the plate piece portion 32, a bar code with a black color formed by the plate piece portion 32 exposed outside through each slot 51 is recognized.

In the fastener 1 in the present embodiment, since the right half portion 34 of the plate piece portion 32 urges the lid member 4 in the open direction, in a state wherein the locking claw 44 and the lower end face 19 are not engaged, the fastener 1 is returned to the intermediate state shown in Figs. 6 and 7. In a case of viewing the fastener 1 from above, the right half portion 34 is not exposed through the large slot 53 in the intermediate state. However, in the fastening completion state, the right half portion 34 is pressed by the lid member 4 so as to bend, and to be exposed through the large slot 53. Consequently, by detecting the bar code formed from the slot group 52 and the plate piece portion 32, the fastening completion state can be recognized by being clearly distinguished from the other state.

Although the explanation of the specific embodiment has been completed here, the present invention is not limited to the embodiment described hereinabove, and can be widely modified. For example, in place of the large slot 53, the slot 51 displaying one portion of a predetermined bar code may be used. Also, a graphic displayed by the slot may be another graphic other than the bar code. For example, the graphic may be a QR code, and may be a single circular graphic or a square graphic.

### Explanation of Symbols

1 ... a fastener, 2 ... a main body, 3 ... a pin, 4 ... a lid member, 11 ... a leg portion, 12 ... a head portion, 18 ... a through-hole, 19 ... a lower end face, 20 ... a hinge axis, 21 ... a pin recipient hole (an inner hole), 26 ... an elastic claw, 31 ... an axis portion, 32 ... a plate piece portion, 32 ... a plate-like piece, 33 ... a left half portion, 34 ... a right half portion, 35 ... a guide convex portion, 41 ... bearings, 44 ... a locking claw, 47 ... a guide hole, 51 ... slots, 52 ... a slot group, 53 ... a large slot, 100 ... a vehicle body panel, 101 ... an attachment hole, 102 ... a curtain airbag, 104 ... a disc spring

## Claims

1. A fastener which can be connected to a member having an attachment hole, comprising:
a main body including a leg portion which can be inserted into the attachment hole; a head portion which is provided at a base end of the leg portion and cannot pass through the attachment hole; an inner hole extending in an axis line direction of the leg portion from an inside of the leg portion, and opening to an outer face of the head portion; and an elastic claw in a side portion of the leg portion, which can recede to enter into the inner hole by an elastic deformation while being adapted to engage the attachment hole by protruding to an outer side of the leg portion;
a pin received into the inner hole in such a way that a base end protrudes from an end portion of a head portion side of the inner hole, and being displaceable between a first position allowing a displacement of the elastic claw into the inner hole, and a second position blocking a displacement of the elastic claw into the inner hole; and
a lid member connected to the head portion, and holding the pin in the second position,
wherein the pin includes a plate piece portion having flexibility in the base end and being bent,
the lid member includes a display hole which is a through-hole, and
in a state wherein the lid member is connected to the head portion, the plate piece portion is pressed by the lid member so as to be deformed, and to block one end of the display hole.

2. A fastener according to claim 1, wherein the display hole is a slot group comprising a plurality of slots arrayed in a bar code shape, and in a state wherein the lid member is connected to the head portion, the plate piece portion blocks a predetermined slot of the slot group.

3. A fastener according to claim 1 or 2, wherein the lid member is turnably supported in the head portion.

4. A fastener according to claim 3, wherein the lid member includes a guide hole having a long hole shape, and the pin includes a guide convex portion received into the guide hole displaceablly, and the lid member turns relative to the head portion, so that while sliding inside the guide hole, the guide convex portion is pressed from a hole wall of the guide hole, and the pin is displaced relative to the inner hole.

5. A fastener according to any one of claims 1 to 4, wherein the plate piece portion has a different color from the lid member.
